(19) Europäisches Patentamt / European Patent Office / Office européen des brevets

(11) **EP 2 650 699 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(51) Int Cl.:
***G01S 19/21*** *(2010.01)*

(21) Anmeldenummer: **13001737.9**

(22) Anmeldetag: **05.04.2013**

(54) **Detektion von gefälschten Signalen in einem Satellitennavigationssystem**

Detection of counterfeit signals in a satellite navigation system

Détection de faux signaux dans un système de navigation par satellite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2012 DE 102012007192**

(43) Veröffentlichungstag der Anmeldung:
**16.10.2013 Patentblatt 2013/42**

(73) Patentinhaber: **Airbus Defence and Space GmbH 82024 Taufkirchen (DE)**

(72) Erfinder:
• **Trautenberg, Hans L., Dr. 50823 Köln (DE)**
• **Vilzmann, Johann 83026 Rosenheim (DE)**

(74) Vertreter: **Frenkel, Matthias Alexander Wuesthoff & Wuesthoff Patentanwälte PartG mbB Schweigerstrasse 2 81541 München (DE)**

(56) Entgegenhaltungen:
**WO-A2-2006/085976    US-A- 5 557 284**

**Beschreibung**

Die Erfindung betrifft eine Vorrichtung und ein Verfahren zur Detektion von gefälschten Signalen in einem Satellitennavigationssystem gemäß Anspruch 1 bzw. 6 sowie ein Nutzungssystem für Signale eines Satellitennavigationssystems gemäß Anspruch 5.

Zur Standortbestimmung mittels Satellitennavigationssystemen sind Nutzer auf korrekte Signale der Satelliten (Navigationssignale) angewiesen. Korrekte Signale enthalten zur Standortbestimmung erforderliche und richtige, d.h. insbesondere integere Navigationsnachrichten, die Ephemeriden der Satelliten und Sendezeitpunkte enthalten.

Bei den bekannten und im Einsatz befindlichen Satellitennavigationssystemen wie NAVSTAR-GPS werden Satellitensignale für zivile Anwender auch unverschlüsselt übertragen. Grundsätzlich besteht daher bei solchen Navigationssystemen die technische Möglichkeit, manipulierte, insbesondere gefälschte Navigationssignale in Bodennähe zu erzeugen und mittels Pseudoliten abzustrahlen, um eine korrekte Standortbestimmung zu verhindern. Die manipulierten Navigationssignale überlagern hierbei die echten von den Satelliten abgestrahlten Signale und können formal gültige, aber falsche Navigationsnachrichten, also gefälschte Informationen zur Standort- bzw. Positionsbestimmung enthalten.

Das Aussenden von gefälschten (bzw. manipulierten) Navigationssignalen wird als "Spoofing" bezeichnet, da Nutzer die gefälschten Signale oft nicht von den echten unterscheiden können, und damit einem Empfänger korrekte Navigationssignale vorgetäuscht werden.

Als Gegenmaßnahmen zu Spoofing (Anti-Spoofing) sind insbesondere folgende Verfahren bekannt:

- Authentifizierung der Navigationsnachricht: Diese Art der Authentifizierung betrifft nur die Navigationsnachricht, nicht aber das Signal. Täuscher können jedoch ihre Navigationssignale mit der echten Navigationsnachricht versehen und die Pseudoranges entsprechend berechnen.

- Benutzung von RAIM (Receiver Autonomous Integrity Monitoring) Techniken in Empfängern der Navigationssignale (empfängerintegrierte Logik): Damit können zwar ein oder auch mehrere gefälschte Navigationssignale detektiert werden, aber nicht die Fälschung von Signalen einer kompletten Satellitenkonstellation.

- Beobachtung der Signalstärke in Empfängern, um einen Täuscher aufgrund höherer oder schwankender Signalstärke zu identifizieren: Dies ist aber aufgrund der Schwankungsbreite der Empfangssignalstärke, die auch bei echten Signalen gegeben ist, nicht sehr zuverlässig. Zudem ist es technisch nicht sehr schwierig, gefälschte Navigationssignale in einem Leistungsbereich abzustrahlen, der etwa dem Leistungsbereich von empfangenen Satellitensignalen entspricht.

- Benutzung von direktiven Antennen oder von mehreren Antennen mit bekannter Geometrie, um die Richtung, aus denen die Navigationssignale abgestrahlt werden, zu detektieren. Beispielsweise können Antennen verwendet werden, die Signale von Satelliten nur von oben empfangen und Signale, die aus Bodennähe kommen, unterdrücken. Das erfordert jedoch eine entsprechende Ausrichtung eines Empfängers für Navigationssignale, so dass die direktiven Antennen in Richtung zu den Satelliten ausgerichtet sind und nicht in Richtung zum Boden.

Wie zu den bekannten Anti-Spoofing-Maßnahmen oben erläutert ist, weisen die Maßnahmen mehr oder weniger große Nachteile bei der Detektion von gefälschten Signalen auf.

Aus der US5,557,284 ist es bekannt, gefälschte Signale dadurch zu detektieren, dass ein Antennenpaar zum Empfangen von Signalen eines Satellitennavigationssystems eingesetzt und Phasendifferenzen zwischen den vom Antennenpaar empfangenen Signalen ermittelt werden. Die ermittelten Phasendifferenzen werden auf Phasenänderungen überwacht, die von einem Datenprozessor mit weiteren Daten verarbeitet werden, um gefälschte Signale zu erkennen.

Eine Aufgabe der vorliegenden Erfindung besteht nun darin, eine weiter verbesserte Detektion von gefälschten Signalen in einem Satellitennavigationssystem anzugeben.

Diese Aufgabe wird durch eine Vorrichtung und ein Verfahren zur Detektion von gefälschten Signalen in einem Satellitennavigationssystem mit den Merkmalen von Anspruch 1 bzw. 6 und ein Nutzungssystem für Signale eines Satellitennavigationssystems mit den Merkmalen von Anspruch 5 gelöst. Weitere Ausgestaltungen der Erfindung sind Gegenstand der abhängigen Ansprüche.

Zur Verbesserung der Detektion von gefälschten Signalen in einem Satellitennavigationssystem schlägt die Erfindung vor, Signale eines Satellitennavigationssystems mit mindestens zwei Antennen und einem oder mehreren Empfängern zu empfangen und die Phasendifferenzen der empfangenen Signale für jede Antenne zu bestimmen. Bei Signalen von Satelliten werden die Phasendifferenzmessungen an den einzelnen Antennen verschiedene Phasendifferenzen für die gleichen Satellitenpaare ergeben. Werden die Signale jedoch von einer einzigen Quelle abgestrahlt, sind die Phasendifferenzen zwischen den einzelnen Signalen an jeder Antenne gering, insbesondere nahezu identisch. Somit können Signale, die von einer Quelle abgestrahlt werden, detektiert werden. Damit kann relativ zuverlässig ein einzelner Spoofing-Sender, der mehrere falsche Navigationssignale abstrahlt, detektiert werden. Die Erfindung erfordert auch nicht die technisch relativ aufwendige Bestimmung der Richtungen, aus der Navigationssignale kommen, beispielsweise mittels direktiven Antennen. Es reicht nach der Erfindung vielmehr aus, auf der Basis von Phasendifferenzen an den einzelnen Antennen zu arbeiten, wobei als Antennen beispielsweise einfache omnidirektionale Antennen eingesetzt werden können. Auch müssen weder der Abstand noch die Lage der einzelnen Antennen zueinander konstant sein.

Ein weiterer Vorteil der Erfindung besteht darin, dass handelsübliche Antennen und Empfänger für Navigationssignale benutzt werden können, die geeignet sind, Phasendifferenzen zu bestimmen.

Eine Ausführungsform der Erfindung betrifft eine Vorrichtung zur Detektion von gefälschten Signalen einem Satellitennavigationssystem mit

mindestens zwei Antennen mit einem oder mehreren Empfängern zum Empfangen von Navigationssignalen,

einer Phasendifferenz-Messeinheit zum Ermitteln von Phasendifferenzen der empfangenen Navigationssignale für jede Antenne, und

einer Detektionseinheit zum Erkennen von gefälschten Navigationssignalen unter den empfangenen Navigationssignalen anhand der ermittelten Phasendifferenzen.

Eine derartige Vorrichtung kann beispielsweise zumindest teilweise in Chip-Sets für Empfänger für Satellitennavigationssignale integriert werden, um effizient gefälschte Navigationssignale erkennen zu können. Beispielsweise können die Phasendifferenz-Messeinheit in die Hochfrequenz-Einheit (RF Stage) und die Detektionseinheit in den Signalprozessor eines Chips oder Chip-Sets für GNSS-Empfänger integriert sein.

Die Phasendifferenz-Messeinheit kann ausgebildet sein, Phasendifferenzen zwischen den von jeder Antenne empfangenen Navigationssignalen durch Trägerphasenmessungen zu ermitteln.

Ferner ist eine Referenzschwingungseinheit zum Erzeugen einer Referenzschwingung mit der gleichen Frequenz wie die Trägerschwingung der empfangenen Navigationssignale vorgesehen, und

die Phasendifferenz-Messeinheit kann ausgebildet sein, Phasendifferenzen zwischen den von jeder Antenne empfangenen Navigationssignalen anhand von Messungen der Phasendifferenzen zwischen den Trägerphasen einzelner Navigationssignale und der Phase der Referenzschwingung zu ermitteln.

Die Detektionseinheit kann ausgebildet sein, Navigationssignale als gefälschte Navigationssignale zu erkennen, wenn die Phasendifferenzen dieser Navigationssignale an jeder Antenne nahezu identisch sind.

Die mindestens zwei Antennen können omnidirektionale Antennen sein.

Eine weitere Ausführungsform der Erfindung betrifft ein Nutzungssystem für Signale eines Satellitennavigationssystems mit

einer Vorrichtung zur Detektion von gefälschten Signalen einem Satellitennavigationssystem nach der Erfindung, und

einer Navigationssignal-Prozessierungseinheit zum Verarbeiten empfangender Navigationssignale, wobei von der Vorrichtung als gefälscht erkannte und entsprechende signalisierte Navigationssignale von der Verarbeitung ausgeschlossen werden.

Mit einem derartigen Nutzungssystem kann effizient verhindert werden, dass gefälschte Navigationssignale die Positionsbestimmung beeinträchtigen oder verfälschen, was insbesondere bei einer sicherheitskritischen Anwendung zur Positionsbestimmung von Bedeutung ist, wie beispielsweise der Flugnavigation.

Schließlich betrifft eine Ausführungsform der Erfindung ein Verfahren zur Detektion von gefälschten Signalen einem Satellitennavigationssystem mit den folgenden Schritten:

Empfangen von Navigationssignalen mit mindestens zwei Antennen mit einem oder mehreren Empfängern,

Ermitteln von Phasendifferenzen der empfangenen Navigationssignale für jede Antenne mit einer Phasendifferenz-Messeinheit, und

Erkennen von gefälschten Navigationssignalen unter den empfangenen Navigationssignalen anhand der ermittelten Phasendifferenzen mit einer Detektionseinheit.

Ein derartiges Verfahren kann beispielsweise in ein Steuerprogramm eines Nutzungssystems für Navigationssignale eines Sattelitennavigationssystems implementiert sein, um gefälschte Navigationssignale erkennen zu können und diese bei einer Positionsbestimmung nicht zu berücksichtigen. Es kann auch in eine Navigationssoftware integriert sind, die auf einer bestimmten Computerplattform ausgeführt wird und zum Verarbeiten von empfangenen Navigationssignalen implementiert ist.

Gemäß dem Verfahren können Phasendifferenzen zwischen den von jeder Antenne empfangenen Navigationssignalen durch Trägerphasenmessungen ermittelt werden.

Das Verfahren ist ferner durch folgenden Schritt gekennzeichnet:

Erzeugen einer Referenzschwingung mit der gleichen Frequenz wie die Trägerschwingung der empfangenen Navigationssignale eine durch Referenzschwingungseinheit.

Das Verfahren kann ferner durch folgenden Schritt gekennzeichnet sein:

Ermitteln der Phasendifferenzen zwischen den von jeder Antenne empfangenen Navigationssignalen anhand von Messungen der Phasendifferenzen zwischen den Trägerphasen einzelner Navigationssignale und der Phase der Referenzschwingung.

Weiterhin kann das Verfahren durch den folgenden Schritt gekennzeichnet sein:

Erkennen von Navigationssignalen als gefälschte Navigationssignale durch die Detektionseinheit, wenn die Phasendifferenzen dieser Navigationssignale an jeder Antenne nahezu identisch sind.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in der Zeichnung werden die in der hinten angeführten Liste der Bezugszeichen verwendeten Begriffe und zugeordneten Bezugszeichen verwendet.

Die Zeichnung zeigt in

Fig. 1 ein Szenario, bei dem ein Ausführungsbeispiel eines Nutzungssystems für Signale eines Satellitennavigationssystems gemäß der Erfindung Navigationssignale von Satelliten und gefälschte Navigationssignale von Pseudoliten in Bodennähe empfängt;

Fig. 2 ein Blockschaltbild eines Ausführungsbeispiels einer Vorrichtung zur Detektion von gefälschten Signalen einem Satellitennavigationssystem gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

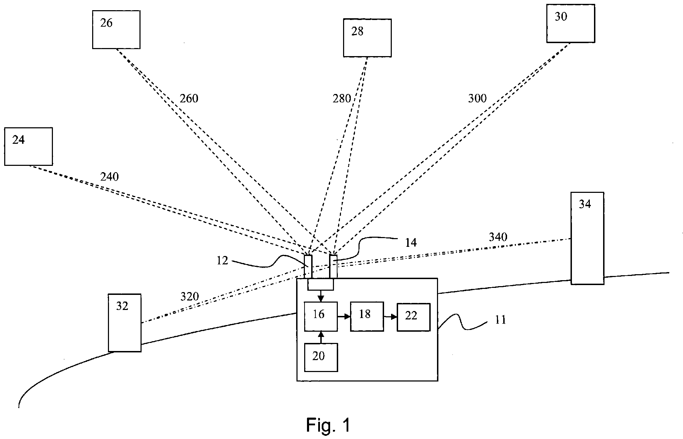

Bei dem in Fig. 1 gezeigten beispielhaften Szenario befindet sich ein Nutzungssystem 11 für ein globales Satellitennavigationssystem GNSS (Global Navigation Satellite System) wie beispielsweise NAVSTAR-GPS, GLONASS oder dem geplanten europäischen GNSS GALILEO, auf der Erdoberfläche.

Satelliten 24, 26, 28 und 30 des GNSSS strahlen (Navigations-) Signale 240, 260, 280 bzw. 300 ab, die Navigationsnachrichten des GNSS enthalten. Navigationsnachrichten weisen Ephemeriden der Satelliten, die Sendezeitpunkte der Signale, Korrekturdaten, einen Almanach und dergleichen Daten für die genaue Positions- bzw. Standortbestimmung des Nutzungssystems 10 auf.

Die Navigationssignale 240, 260, 280 und 300 sind unverschlüsselte oder auch verschlüsselte spreizkodierte Signale, die mit einer Trägerfrequenz in einem Bereich von beispielsweise 1,5 bis 2 GHz von den Satelliten 24, 26, 28 bzw. 30 abgestrahlt werden.

Zum Erzeugen der Signale weist jeder Satellit eine hochgenaue Borduhr, insbesondere eine Atomuhr auf. Die Borduhren der Satelliten 24, 26, 28 und 30 sind idealerweise synchronisiert. Jeder Satellit besitzt einen eigenen Spreizkode (PRN (Pseude Random Noise)-Impulsfolge), der dem Nutzungssystem 11 bekannt ist, so dass dieses ein von einem der Satelliten empfangenes Signal dekodieren kann. Die mit einem Signal zu übertragenden Navigationsnachrichten eines Satelliten werden mit dem Spreizkode des Satelliten gespreizt. Der so erzeugte Datenstrom wird einem Trägerfrequenzsignal insbesondere durch Phasenumtastung (Phase Shift Keying) aufmoduliert. Das so erzeugte hochfrequente PSK-modulierte Signal wird vom Satelliten über geeignete Antennen insbesondere in Richtung Erdoberfläche abgestrahlt.

Das System 11 empfängt die Signale 240, 260, 280 und 300 der Satelliten 24, 26, 28 bzw. 30 des GNSS mit zwei omnidirektionale Antennen 12 und 14. Die empfangenen Signale werden nun zum Erhalten der darin enthaltenen Navigationsnachrichten im Nutzungssystem 11 in an sich bekannter Weise und wie im Folgenden kurz beschrieben verarbeitet:

Das hochfrequente Empfangssignal eines Satelliten wird vom Hochfrequenzbereich (HF) in einen Zwischenfrequenzbereich (ZF) umgesetzt. Hierzu wird lokal im Nutzungssystem eine Trägerschwingung erzeugt. Nach der Umsetzung des Empfangssignals in den ZF-Bereich erfolgt die Erfassung des Signals mittels eines Code-Phase-Verfahrens. Hierbei wird der dem Nutzungssystem 11 bekannte Spreizkode des Satelliten, der das Signal abgestrahlt hat, verwendet, um eine Referenz-PRN-Impulsfolge zu erzeugen und diese mit dem in den ZF-Bereich umgesetzten Empfangssignal zu korrelieren. Bei erfolgter Korrelation wird die im empfangenen Signal enthaltene Navigationsnachricht dekodiert und von einer Navigationssignal-Prozessierungseinheit 22 weiterverarbeitet.

Im Folgenden wird nun beschrieben, wie das Nutzungssystem 11 gefälschte Navigationssignale erkennen kann. Solche gefälschten Signale können beispielsweise von sogenannten Spoofing-Pseudoliten (Pseudo-Satelliten) 32 und 34 abgestrahlt werden, die sich auf oder in der Nähe der Erdoberfläche befinden. Beispielsweise kann ein Spoofing-Pseudolit als mobile GNSS-Spoofing-Einheit ausgebildet sein, die auch von Flugkörpern transportiert werden kann.

Ein Spoofing-Pseudolit 32, 34 enthält eine Borduhr, eine Einheit zur Erzeugung von formal gültigen Navigationsnachrichten, die aber falsche Daten für die Positions- bzw. Standortbestimmung des Nutzungssystems 10 aufweisen, und eine Signalerzeugungseinheit für Navigationssignale. Wie in den Satelliten 24, 26, 28 und 30 des GNSS werden die formal gültigen Navigationsnachrichten mit falschen Daten mittels Navigationssignalen 320 und 340 von den Spoofing-Pseudoliten 32 bzw. 34 abgestrahlt. Die Navigationssignale 320 und 340 weisen hierbei dieselbe Trägerfrequenz wie die Navigationssignale 240, 260, 280 und 300 der Satelliten 24, 26, 28 und 30 auf und überlagern daher diese GNSS-Navigationssignale. Zur Spreizkodierung werden von den Spoofing-Pseudoliten 32 und 34 gültige Spreizkodes der Satelliten des GNSS verwendet, so dass ein Nutzungssystem die empfangenen gefälschten Navigationssignale verarbeiten kann.

Jeder Spoofing-Pseudolit 32 und 34 kann mehrere Navigationssignale des GNSS abstrahlen, beispielsweise kann jeder der Pseudoliten 32 und 34 jeweils alle vier Navigationssignale 240, 260, 280 und 300 der Satelliten 24, 26, 28 bzw. 20 fälschen und abstrahlen, oder der Pseudolit 32 kann mit seinen Navigationssignalen 320 die Navigationssignale 240 und 260 der beiden Satelliten 24 bzw. 26 und der Pseudolit 34 mit seinen Navigationssignalen 340 die Navigationssignale 280 und 300 der beiden Satelliten 28 bzw. 30 abstrahlen. Ein Pseudolit wird typischerweise mindestens mehrere gefälschte Navigationssignale abstrahlen, so dass ein Nutzungssystem nicht durch eine Plausibilitätsprüfung die gefälschten Navigationssignale des Pseudoliten anhand weiterer SatellitenNavigationssignale erkennen kann.

Das in Fig. 1 gezeigte Nutzungssystem 11 empfängt nun neben den Satelliten-Navigationssignalen 240, 260, 280 und 300 auch die gefälschten Navigationssignale 320 und 340 wie die GNSS-Navigationssignale 240, 260, 280 und 300 über die beiden Antennen 12 und 14. Die beiden Antennen 12 und 14 sind mit einer Phasendifferenz-Messeinheit 16 verbunden.

Die Phasendifferenz-Messeinheit 16 ermittelt Phasendifferenzen zwischen den von jeder der beiden Antennen 12 und 14 empfangenen Navigationssignalen, also für jede der beiden Antennen 12 und 14 die Phasendifferenzen zwischen den von empfangenen Signalinstanzen der Navigationssignale 240, 260, 280, 300 und der gefälschten Navigationssignale 320, 340. Phasendifferenzen können von der Phasendifferenz-Messeinheit 16 durch Trägerphasenmessungen ermittelt werden.

Bei der Trägerphasenmessung ermittelt die Phasendifferenz-Messeinheit 16 Phasendifferenzen zwischen den von jeder der beiden Antennen 12 und 14 empfangenen Navigationssignalen 240, 260, 280, 300, 320, 340 anhand der Phase einer Referenzschwingung, die im Nutzungssystem 10 von einer Referenzschwingungseinheit 20, insbesondere einem lokalen stabilisierten Quarzoszillator erzeugt wird.

Für die über die erste Antenne 12 empfangenen Navigationssignale 240 und 260 lautet beispielsweise die ermittelte Phasendifferenz

$$\Delta\varphi_{240, 260, 12} = (\varphi_{\text{Träger}, 240, \text{Antenne } 12} - \varphi_{\text{Ref}}) - (\varphi_{\text{Träger}, 260, \text{Antenne } 12} - \varphi_{\text{Ref}})$$

wobei $\varphi_{\text{Ref}}$ den Phasenwinkel der Referenzschwingung, $\varphi_{\text{Träger}, 240, \text{Antenne } 12}$ den Phasenwinkel der Trägerschwingung des über die Antenne 12 empfangenen Navigationssignals 240 und $\varphi_{\text{Träger}, 260, \text{Antenne } 12}$ den Phasenwinkel der Trägerschwingung des über die Antenne 12 empfangenen Navigationssignals 260 angibt.

Entsprechend lautet beispielsweise für zwei gefälschte über die erste Antenne 12 vom Pseudoliten 32 empfangene Navigationssignale 320_240 und 320_260 die ermittelte Phasendifferenz

$$\Delta\varphi_{320\_240, 320\_260, 12} = (\varphi_{\text{Träger}, 320\_240, \text{Antenne } 12} - \varphi_{\text{Ref}}) - (\varphi_{\text{Träger}, 320\_260, \text{Antenne } 12} - \varphi_{\text{Ref}}),$$

wobei 320_240 und 320_260 zwei verschiedene vom Pseudoliten 32 abgestrahlte gefälschte Navigationssignale 240 und 260 der Satelliten 24 bzw. 26, $\varphi_{\text{Ref}}$ den Phasenwinkel der Referenzschwingung, $\varphi_{\text{Träger}, 320\_1, \text{Antenne } 12}$ den Phasenwinkel der Trägerschwingung des über die Antenne 12 empfangenen gefälschten Navigationssignals 320_240 und $\varphi_{\text{Träger}, 320\_240, \text{Antenne } 12}$ den Phasenwinkel der Trägerschwingung des über die Antenne 12 empfangenen Navigationssignals 320_240 angibt.

Für jedes Paar der über eine der beiden Antennen 12 und 14 empfangenen Navigationssignale 240, 260, 280, 300, 320, 340 wird von der Phasendifferenz-Messeinheit 16 also eine Phasendifferenz $\Delta\varphi$ anhand von Messungen der Phasendifferenzen zwischen den Trägerphasen einzelner Navigationssignale und der Phase der Referenzschwingung wie vorstehend beispielhaft erläutert ermittelt.

Die so ermittelten Phasendifferenzen $\Delta\varphi$ werden von einer mit der Phasendifferenz-Messeinheit 16 verbundenen Detektionseinheit 18 verarbeitet, indem die Detektionseinheit 18 die Navigationssignale als gefälschte Signale erkennt, deren Phasendifferenzen an jeder der beiden Antennen nahezu identisch sind, da diese Signale dann mit hoher Wahrscheinlichkeit von einer einzigen Quelle, nämlich einem der Spoofing-Pseudoliten 32 oder 34 stammen, während die Signale von Satelliten-Paaren wie beispielsweise der Satelliten 24 und 30 an jeder Antenne 12 und 14 in der Regel deutlich unterschiedliche Phasendifferenzen erzeugen.

Für die Phasendifferenz der über die erste Antenne 12 und die zweite Antenne 14 empfangenen Navigationssignale 240 und 260 der Satelliten 24 bzw. 26 gilt also beispielsweise:

$$\Delta\varphi_{240,\,260,\,12} \neq \Delta\varphi_{240,\,260,\,14},$$

während für die Phasendifferenz der über die erste Antenne 12 und die zweite Antenne 14 empfangenen, gefälschten Navigationssignale 320_1 und 320_2 des Spoofing-Pseudoliten 32 beispielsweise gilt

$$\Delta\varphi_{320\_240,\,320\_260,\,12} \approx \Delta\varphi_{320\_240,\,320\_260,\,14}$$

Zum Erkennen von Navigationsisgnalen als gefälschte Signale kann die Detektionseinheit 18 alle etwa identischen Phasendifferenzen von Signalpaaren, die an den Antennen 12 und 14 empfangen wurden, ermitteln, beispielsweise indem alle ermittelten Phasendifferenzen $\Delta\varphi$ in einer Tabelle nach größtmöglicher Übereinstimmung sortiert gespeichert und die Signalpaare mit der größten Übereinstimmung ihrer Phasendifferenzen an verschiedenen Antennen als gefälscht gekennzeichnet werden.

Eine andere Detektionsmöglichkeit besteht darin, dass beispielsweise die Detektionseinheit 18 die von der Phasendifferenz-Messeinheit 16 ermittelten Phasendifferenzen für gleiche an jeder Antenne 12 und 14 empfangene Signal-Paare voneinander subtrahiert und die so berechnete Differenz (der Phasendifferenzen) mit einem vorgegebenen Differenzschwellwert vergleicht. Der vorgegebene Differenzschwellwert kann insbesondere statistisch ermittelt werden. Vor allem kann der vorgegebene Differenzschwellwert abhängig von einem statistischen Mittelwert typischer Differenzen von Phasendifferenzen zwischen unverfälschten Navigationssignalen gewählt werden, insbesondere geringer als ein solcher statistischer Mittelwert sein. Beispielsweise kann der statistische Mittelwert der Phasendifferenzen der Navigationssignale 240, 260, 280 und 300 über einen längeren Messzeitraum ermittelt und der vorgegebene Differenzschwellwert etwas geringer als der derart ermittelte statistische Mittelwert gewählt werden.

Die Detektionseinheit 18 kann dann Navigationssignale als gefälscht erkennen, wenn die Differenzen der Phasendifferenzen dieser Navigationssignal-Paare geringer als der vorgegebene Differenzschwellwert sind, also beispielsweise gilt:

$$\left| \Delta\varphi_{320\_240,\,320\_260,\,12} - \Delta\varphi_{320\_240,\,320\_260,\,14} \right| < \Delta\Delta\varphi,$$

wobei mit $\Delta\Delta\varphi$ der Differenzschwellwert bezeichnet ist.

Die von der Detektionseinheit 18 als gefälscht erkannten Navigationssignale werden an eine Navigationssignal-Prozessierungseinheit 22 ausgegeben, die alle empfangenen Navigationssignale und die darin enthaltenen Navigationsnachrichten verarbeitet. Die Einheit 22 kann dann die als gefälscht erkannten Navigationssignale von der Verarbeitung ausschließen und/oder für einen Nutzer signalisieren, beispielsweise über eine Anzeigeeinrichtung.

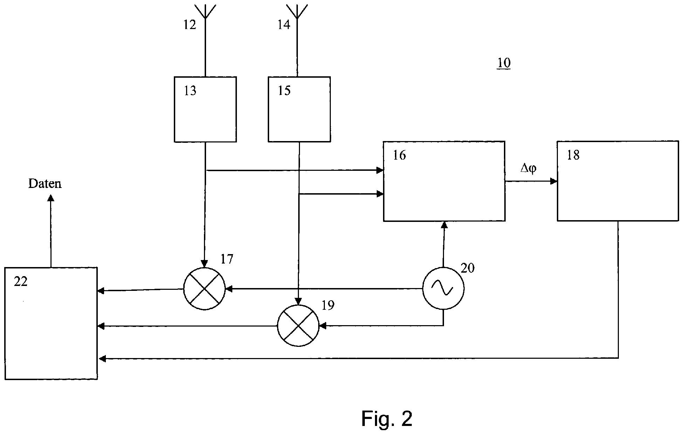

Fig. 2 zeigt ein Blockschaltbild eines Ausführungsbeispiels der erfindungsgemäßen Vorrichtung mit einer ersten und einer zweiten omnidirektionalen Antenne 12 bzw. 14. Der ersten Antenne 12 ist ein erster Empfänger 13, der zweiten Antenne 14 ein zweiter Empfänger 15 nachgeschaltet. Die beiden Empfänger 13 und 15 weisen insbesondere einen rauscharmen Hochfrequenzverstärker auf, der die empfangenen hochfrequenten Navigations- bzw. Trägerfrequenzsignale verstärkt. Die verstärkten empfangen Signale werden vor der Verarbeitung durch eine Navigationssignal-Prozessierungseinheit 22 über einen ersten und einen zweiten Mischer 17 bzw. 19 in einen ZF-Bereich transformiert. Die in den ZF-Bereich transformierten Signale werden dann auf an sich bekannten Weise von der Navigationssignal-Prozessierungseinheit 22 verarbeitet (insbesondere Korrelation der Navigationssignale mit den Spreizkodes der Satelliten zum Dekodieren, Extraktion der Navigationsnachrichten aus den dekodierten Navigationssignalen). Die Navigationssignal-Prozessierungseinheit 22 gibt als Verarbeitungsergebnis die Daten der Navigationsnachrichten aus, anhand derer von einem Kontroller die aktuelle Position ermittelt werden kann.

Parallel zu dem vorstehend beschriebenen Verarbeitungszeig werden die verstärkten empfangen Signale einer Phasendifferenz-Messeinheit 16 zugeführt, welche Phasendifferenzen $\Delta\varphi$ zwischen den von jeder der beiden Antennen 12 und 14 empfangenen Navigationssignalen anhand der Phase einer von einer Referenzschwingungseinheit 20 erzeugten Referenzschwingung ermittelt.

Die ermittelten Phasendifferenzen $\Delta\varphi$ werden an eine Detektionseinheit 18 übermittelt, die anhand der Phasendifferenzen $\Delta\varphi$ gefälschte Navigationssignale erkennt und die Kennungen dieser Signale an die Navigationssignal-Prozessierungseinheit 22 ausgibt, so dass diese die als gefälscht erkannten Navigationssignale von der Positionsbestimmung ausschliessen kann und ggf. auf einem Display eines Nutzungssystems signalisieren kann, dass gefälschte Navigationssignale an der aktuellen Position des Nutzungssystems detektiert wurden.

Die vorliegende Erfindung ermöglicht es, von einer Quelle abgestrahlte Signale zu erkennen und damit relativ zuverlässig einen einzelnen Spoofing-Sender, der mehrere falsche Navigationssignale abstrahlt, zu detektieren. Zusammenfassend kann mit der Erfindung eine verbesserte Detektion von gefälschten Signalen einem Satellitennavigationssystem erreicht werden, insbesondere im Vergleich zu bekannten Verfahren, die teilweise einen höheren technischen Aufwand zur Detektion erfordern.

BEZUGSZEICHEN UND AKRONYME

| | |
|---|---|
| 10 | Vorrichtung zur Detektion von gefälschten Signalen einem Satellitennavigationssystem |
| 11 | Nutzungssystem für Signale eines Satellitennavigationssystems |
| 12 | erste omnidirektionale Antenne |
| 13 | erster Empfänger |
| 14 | zweite omnidirektionale Antenne |
| 15 | zweiter Empfänger |
| 16 | Phasendifferenz-Messeinheit |
| 17 | erster Mischer |
| 18 | Detektionseinheit |
| 19 | zweiter Mischer |
| 20 | Referenzschwingungseinheit |
| 22 | Navigationssignal-Prozessierungseinheit |
| 24 | Satellit |
| 26 | Satellit |
| 28 | Satellit |
| 30 | Satellit |
| 32 | Spoofing-Pseudolit |
| 34 | Spoofing-Pseudolit |
| 240 | Satelliten-Navigationssignal |
| 260 | Satelliten-Navigationssignal |
| 280 | Satelliten-Navigationssignal |
| 300 | Satelliten-Navigationssignal |
| 320 | gefälschtes Navigationssignal |
| 340 | gefälschtes Navigationssignal |

**Patentansprüche**

**1.** Vorrichtung (10) zur Detektion von gefälschten Signalen in einem Satellitennavigationssystem mit

- mindestens zwei Antennen (12, 14) mit einem oder mehreren Empfängern zum Empfangen von Navigationssignalen (240, 260, 280, 300, 320, 340),
- einer Phasendifferenz-Messeinheit (16) zum Ermitteln von Phasendifferenzen der empfangenen Navigationssignale für jede Antenne, und
- einer Detektionseinheit (18) zum Erkennen von gefälschten Navigationssignalen (320, 340) unter den empfangenen Navigationssignalen anhand der ermittelten Phasendifferenzen,

wobei

- die Phasendifferenz-Messeinheit (16) ausgebildet ist, für jedes Paar der über eine der beiden Antennen (12, 14) empfangenen Navigationssignale (240, 260, 280, 300, 320, 340) eine Phasendifferenz $\Delta\varphi$ anhand von Messungen der Phasendifferenzen zwischen den Trägerphasen einzelner Navigationssignale und der Phase einer Referenzschwingung zu ermitteln, und

- die Detektionseinheit (18) ausgebildet ist, Navigationssignale als gefälschte Navigationssignale zu erkennen, wenn die Phasendifferenzen dieser Navigationssignale an jeder Antenne nahezu identisch sind,

- wobei eine Referenzschwingungseinheit (20) zum Erzeugen der Referenzschwingung mit der gleichen Frequenz wie die Trägerschwingung der empfangenen Navigationssignale vorgesehen ist.

2. Vorrichtung nach Anspruch 1, **dadurch gekennzeichnet, dass**

- die Phasendifferenz-Messeinheit (16) ausgebildet ist, Phasendifferenzen zwischen den von jeder Antenne empfangenen Navigationssignalen durch Trägerphasenmessungen zu ermitteln.

3. Vorrichtung nach einem der Ansprüche 1-2, **dadurch gekennzeichnet, dass**

- die mindestens zwei Antennen (12, 14) omnidirektionale Antennen sind.

4. Nutzungssystem (11) für Signale eines Satellitennavigationssystems mit

- einer Vorrichtung (10) zur Detektion von gefälschten Signalen in einem Satellitennavigationssystem nach einem der vorhergehenden Ansprüche, und

- einer Navigationssignal-Prozessierungseinheit (22) zum Verarbeiten empfangender Navigationssignale, wobei von der Vorrichtung (10) als gefälscht erkannte und entsprechende signalisierte Navigationssignale von der Verarbeitung ausgeschlossen werden.

5. Verfahren zur Detektion von gefälschten Signalen in einem Satellitennavigationssystem mit den folgenden Schritten:

- Empfangen (S10) von Navigationssignalen (240, 260, 280, 300, 320, 340) mit mindestens zwei Antennen (12, 14) mit einem oder mehreren Empfängern,

- Ermitteln (S12) von Phasendifferenzen der empfangenen Navigationssignale für jede Antenne mit einer Phasendifferenz-Messeinheit (16), und

- Erkennen (S14) von gefälschten Navigationssignalen unter den empfangenen Navigationssignalen anhand der ermittelten Phasendifferenzen mit einer Detektionseinheit (18),

ferner aufweisend die folgenden Schritte:

- Ermitteln einer Phasendifferenz $\Delta\varphi$ für jedes Paar der über eine der beiden Antennen (12, 14) empfangenen Navigationssignale (240, 260, 280, 300, 320, 340) mit der Phasendifferenz-Messeinheit (16) anhand von Messungen der Phasendifferenzen zwischen den Trägerphasen einzelner Navigationssignale und der Phase der Referenzschwingung,

- Erkennen von Navigationssignalen als gefälschte Navigationssignale durch die Detektionseinheit (18), wenn die Phasendifferenzen dieser Navigationssignale an jeder Antenne nahezu identisch sind, und

- Erzeugen einer Referenzschwingung mit der gleichen Frequenz wie die Trägerschwingung der empfangenen Navigationssignale durch eine Referenzschwingungseinheit (20).

6. Verfahren nach Anspruch 5, **dadurch gekennzeichnet, dass**

- Phasendifferenzen zwischen den von jeder Antenne empfangenen Navigationssignalen durch Trägerphasenmessungen ermittelt werden.

**Claims**

1. A device (10) for detection of falsified signals in a satellite navigation system, comprising:

- at least two antennas (12, 14) having one or more receivers for receiving navigation signals (240, 260, 280, 300, 320, 340),

- a phase difference measuring unit (16) configured to determine phase differences of the received navigation signals for each antenna, and
- a detection unit (18) configured to detect falsified navigation signals (320, 340) among the received navigation signals based on the determined phase differences,

wherein

- the phase difference measuring unit (16) is configured to determine, for each pair of the navigation signals (240, 260, 280, 300, 320, 340) received by one of the two antennas (12, 14), a phase difference $\Delta \varphi$ based on measurements of the phase differences between the carrier phases of individual navigation signals and the phase of a reference wave, and
- the detection unit (18) is configured to detect navigation signals as falsified navigation signals when the phase differences of these navigation signals are nearly identical,
- wherein a reference wave unit (20) is provided for generating the reference wave having the same frequency as the carrier wave of the received navigation signals.

2. The device according to claim 1, **characterized in that**

   - the phase difference measuring unit (16) is configured to determine phase differences between the received navigation signals received by each antenna based on carrier phase measurements.

3. The device according to one of claims 1-2, **characterized in that**

   - the at least two antennas (12, 14) are omnidirectional antennas.

4. A use system (11) for signals of a satellite navigation system comprising

   - a device (10) for the detection of falsified signals in a satellite navigation system according to any one of the preceding claims, and
   - a navigation signal processing unit (22) for processing received navigation signals, such that navigation signals detected as falsified by the device (10) are excluded from processing.

5. A method for the detection of falsified signals a satellite navigation system comprising the steps of:

   - receiving (S10) navigation signals (240, 260, 280, 300, 320, 340) by at least two antennas (12, 14) having one or more receivers,
   - determining (S12) phase differences of the received navigation signals for each antenna by a phase difference measuring unit (16), and
   - detecting (S14) falsified navigation signals (320, 340) among the received navigation signals based on the determined phase differences by a detection unit (18),

   further comprising the following steps:

   - determining a phase difference $\Delta \varphi$ for each pair of the navigation signals (240, 260, 280, 300, 320, 340) received by one of the two antennas (12, 14) based on measurements of the phase differences between the carrier phases of individual navigation signals and the phase of a reference wave,
   - detecting navigation signals as falsified navigation signals by the detection unit (18), when the phase differences of these navigation signals are nearly identical at each antenna, and
   - generating a reference wave having the same frequency as the reference wave of the received navigation signals, by a reference wave unit (20).

6. The method according to claim 5, **characterized in that**

   - phase differences between the received navigation signals received by each antenna based on carrier phase measurements are determined based on carrier phase measurements.

**Revendications**

**1.** Dispositif (10) pour détecter des signaux falsifiés dans un système de navigation par satellites, comprenant

- au moins deux antennes (12, 14) comportant un ou plusieurs récepteurs pour recevoir des signaux de navigation (240, 260, 280, 300, 320, 340),
- une unité de mesure de différence de phase (16) pour déterminer les différences de phase des signaux de navigation reçus pour chaque antenne, et
- une unité de détection (18) pour détecter des signaux de navigation falsifiés (320, 340) parmi les signaux de navigation reçus à partir des différences de phase déterminées,

dans lequel

- l'unité de mesure de différence de phase (16) est conçue pour déterminer, pour chaque paire des signaux de navigation (240, 260, 280, 300, 320, 340) reçus via l'une des deux antennes (12, 14), une différence de phase $\Delta\varphi$ à partir de mesures des différences de phase entre les phases porteuses des signaux de navigation individuels et la phase d'une oscillation de référence, et
- l'unité de détection (18) est conçue pour détecter des signaux de navigation en tant que signaux de navigation falsifiés lorsque les différences de phase de ces signaux de navigation à chaque antenne sont quasiment identiques,
- dans lequel une unité d'oscillation de référence (20) est prévue pour générer l'oscillation de référence à la même fréquence que l'oscillation porteuse des signaux de navigation reçus.

**2.** Dispositif selon la revendication 1, **caractérisé en ce que**

- l'unité de mesure de différence de phase (16) est conçue pour déterminer les différences de phase entre les signaux de navigation reçus par chaque antenne par des mesures de phase porteuse.

**3.** Dispositif selon l'une des revendications 1 ou 2, **caractérisé en ce que**

- lesdites au moins deux antennes (12, 14) sont des antennes omnidirectionnelles.

**4.** Système d'utilisation (11) de signaux d'un système de navigation par satellites, comprenant

- un dispositif (10) pour détecter des signaux falsifiés dans un système de navigation par satellites selon l'une des revendications précédentes, et
- une unité de traitement de signaux de navigation (22) pour traiter des signaux de navigation reçus, les signaux de navigation détectés comme étant falsifiés et signalés en conséquence par le dispositif (10) étant exclus du traitement.

**5.** Procédé de détection de signaux falsifiés dans un système de navigation par satellites, comprenant les étapes suivantes :

- réception (S10) de signaux de navigation (240, 260, 280, 300, 320, 340) avec au moins deux antennes (12, 14) comportant un ou plusieurs récepteurs,
- détermination (512) des différences de phase des signaux de navigation reçus pour chaque antenne avec une unité de mesure de différence de phase (16) et
- détection (S14) de signaux de navigation falsifiés parmi les signaux de navigation reçus à partir des différences de phase déterminées avec une unité de détection (18),

comprenant en outre les étapes suivantes :

- détermination d'une différence de phase $\Delta\varphi$ pour chaque paire de signaux de navigation (240, 260, 280, 300, 320, 340) reçus via l'une des deux antennes (12, 14) avec l'unité de mesure de différence de phase (16) à partir de mesures des différences de phase entre les phases porteuses des signaux de navigation individuels et la phase de l'oscillation de référence,
- détection de signaux de navigation en tant que signaux de navigation falsifiés par l'unité de détection (18) lorsque les différences de phase de ces signaux de navigation à chaque antenne sont quasiment identiques et

- génération d'une oscillation de référence à la même fréquence que l'oscillation porteuse des signaux de navigation reçus par une unité d'oscillation de référence (20).

6. Procédé selon la revendication 5, **caractérisé en ce que**

- les différences de phase entre les signaux de navigation reçus par chaque antenne sont déterminées par des mesures de phase porteuse.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5557284 A